Europäisches Patentamt

European Patent Office

Office européen des brevets

(19)

(11) Veröffentlichungsnummer: **0 376 025 B1**

(12) **EUROPÄISCHE PATENTSCHRIFT**

(45) Veröffentlichungstag der Patentschrift: **12.10.94**

(51) Int. Cl.5: **B01D 53/36**, B01J 29/24

(21) Anmeldenummer: **89122738.1**

(22) Anmeldetag: **09.12.89**

Die Akte enthält technische Angaben, die nach dem Eingang der Anmeldung eingereicht wurden und die nicht in dieser Patentschrift enthalten sind.

(54) **Verfahren zur Reduktion von Stickoxiden aus Abgasen.**

(30) Priorität: **14.12.88 DE 3841990**

(43) Veröffentlichungstag der Anmeldung:
**04.07.90 Patentblatt 90/27**

(45) Bekanntmachung des Hinweises auf die Patenterteilung:
**12.10.94 Patentblatt 94/41**

(84) Benannte Vertragsstaaten:
**AT BE CH DE FR GB IT LI LU NL SE**

(56) Entgegenhaltungen:
EP-A- 0 266 807     EP-A- 0 286 507
EP-A- 0 325 511     EP-A- 0 326 667
DE-A- 3 631 950     DE-A- 3 635 284
DE-A- 3 642 018     DE-A- 3 802 871
FR-A- 2 243 732     US-A- 4 046 888
US-A- 4 052 337     US-A- 4 571 329
US-A- 4 732 879

CHEMICAL ABSTRACTS, Band 87, 1977, Seite 266, Zusammenfassung Nr. 43499h,Columbus, Ohio, US; & JP-A-76 69 476 (TORAY INDUSTRIES. INC.) 16-06-1976

(73) Patentinhaber: **DEGUSSA AKTIENGESELL-SCHAFT**
**Weissfrauenstrasse 9**
**D-60311 Frankturt (DE)**

(72) Erfinder: **Baacke, Michael, Dr.**
**Grünaustrasse 19**
**D-6450 Hanau 9 (DE)**
Erfinder: **Brand, Reinhold, Dr.**
**Gustav-Adolf-Strasse 25**
**D-6450 Hanau 1 (DE)**
Erfinder: **Engler, Bernd H., Dr.**
**Treuener Strasse 2**
**D-6450 Hanau 9 (DE)**
Erfinder: **Kiss, Akos, Dr.**
**Odenwaldstrasse 16**
**D-8755 Alzenau-Wasserlos (DE)**
Erfinder: **Kleine-Möllhoff, Peter**
**Am Pfad 12**
**D-8702 Waldbüttelbrunn (DE)**
Erfinder: **Kleinschmit, Peter, Dr.**
**Wildaustrasse 19**
**D-6450 Hanau 9 (DE)**
Erfinder: **Koberstein, Edgar, Dr.**
**Wolfskernstrasse 8**
**D-8755 Alzenau (DE)**

CHEMICAL ABSTRACTS, Band 109, 1988, Se-tite 316, Zusammenfassung Nr. 98130j,Columbus, Ohio, US; & JP-A-63 123 449 (BABCOCK-HITACHI K.K.) 27-05-1988

CHEMICAL ABSTRACTS, Band 85, 1976, Seite 408, Zusammenfassung Nr. 129854r,Columbus, Ohio, US; & JP-A-76 25 472 (TORAY INDUSTRIES INC.) 02-03-1976

CHEMICAL ABSTRACTS, Band 84, 1976, Seite 351, Zusammenfassung Nr. 79183c,Columbus, Ohio, US; & JP-A-75 140 362 (TORAY INDUSTRIES INC.) 11-11-1975

CHEMICAL ABSTRACTS, Band 84, 1976, Seite 319, Zusammenfassung Nr. 155159s,Columbus, Ohio, US; & JP-A-76 11 063 (TORAY INDUSTRIES INC.) 28-01-1976

CHEMISTRY LETTERS, 1975, Seiten 781-784, Chemical Society of Japan; T. SEIYAMAet al.: "Catalytic reduction of nitric oxide with ammonia over transition metalion-exchanged upsilon zeolites"

Erfinder: **Siray, Mustafa, Dr.**
**Gleiwitzer Strasse 3**
**D-6450 Hanau 9 (DE)**

## Beschreibung

Die Erfindung betrifft ein Verfahren zur Reduktion von in Sauerstoff enthaltenden Abgasen vorliegenden Oxiden des Stickstoffs mittels Ammoniak, bei dem die Stickoxide enthaltenden Abgase mit Ammoniakgas gemischt und bei erhöhter Temperatur über einen Nebengruppenmetall enthaltenden Zeolithkatalysator geleitet werden.

Stickoxide, die bei Verbrennungsprozessen entstehen, zählen zu den Hauptverursachern des sauren Regens und den damit verbundenen Umweltschädigungen. Ihre Emission sollte daher durch Entfernung aus den Abgasen vor deren Abgabe an die Umgebung verhindert werden.

Quellen für Stickoxidabgabe in die Umwelt sind hauptsächlich der Kraftfahrzeugverkehr sowie Verbrennungsanlagen, insbesondere Kraftwerke mit Feuerungen oder stationäre Verbrennungsmotoren sowie industrielle Betriebe.

So kann z. B. bei Kraftwerken mit Kesselfeuerung durch Verwendung sehr reiner Brennstoffe oder durch Optimierung der Verbrennungssysteme zwar eine Absenkung der Stickoxidkonzentration im Abgas erzielt werden, jedoch sind diesen feuerungstechnischen Maßnahmen sowohl technische als auch ökonomische Grenzen gesetzt, so daß es bislang nicht möglich ist, weitgehend stickoxidfreies Abgas zu erreichen.

Abgase aus Feuerungen oder aus überstöchiometrisch betriebenen Verbrennungskraftmaschinen enthalten neben den Stickoxiden meist eine größere Menge überschüssigen Sauerstoffs.

Um bei Verwendung von Reduktionsmitteln eine optimale Ausnutzung zu gewährleisten, kommen daher unter ökonomischen Gesichtspunkten hauptsächlich selektive katalytische Reduktionsverfahren für die Entfernung von Stickoxiden aus Abgasen in Frage.

Es ist bereits bekannt, daß Stickoxide durch Behandlung mit einem reduzierenden Gas, wie Ammoniak, in Anwesenheit eines Katalysators selektiv reduziert werden können. Das Ammoniakgas reagiert dabei leicht mit den Oxiden des Stickstoffs aber nur in geringem Umfang mit dem Sauerstoff.

Bei der katalytischen Reduktion von Stickoxiden, z. B. mit $NH_3$, finden in erster Linie sog. Vollkatalysatoren, z. B. in Form von Schüttgut oder Extrudatkörpern, welche zahlreiche parallele, in Strömungsrichtung verlaufende Kanäle aufweisen (Monolithe oder Wabenkörper), Verwendung. Unter einem Vollkatalysator versteht man einen Katalysatorkörper, der durch und durch aus aktiver Masse besteht. Die aktive Masse kann neben den eigentlichen Katalysatoren auch Zusätze von Trägermaterial enthalten.

Als katalytisch aktive Komponenten werden in der Regel Nebengruppenmetalloxide, z. B. des Vanadiums, Wolframs, Molybdäns oder Eisens einzeln oder in Kombination eingesetzt (DE-C-24 58 888). Trägermaterialien mit katalysefördernder Wirkung können $TiO_2$, $BaSO_4$ oder $Al_2O_3$ sein (DE-C-24 58 888 und DE-C-28 42 147). In bestimmten Fällen können solche Katalysatoren auch mit Edelmetallen, wie Platin oder Palladium, versetzt sein (US-A-4 018 706).

Vollkatalysatoren in Monolith- oder Wabenform werden wegen der erheblichen Abrasion und der geringen Verstopfungsgefahr durch Staubpartikel insbesondere in dem Abgasbereich von Feuerungen, in welchem das Abgas noch staubbeladen ist, eingesetzt. In Fällen, in denen das Abgas nahezu staubfrei anfällt, können auch Schüttgutkatalysatoren oder monolithische Trägerkatalysatoren Verwendung finden.

Trägerkatalysatoren mit Monolith- oder Wabenstruktur eignen sich, im Vergleich zu Schüttgutkatalysatoren, besser wegen ihres geringeren Strömungswiderstandes für die Entstickung von Abgasen mit niedrigen Staubgehalten und werden bevorzugt nach einem Staubfilter oder hinter einer Rauchgasentschwefelungsanlage eingesetzt.

Diese Trägerkatalysatoren bestehen aus einem katalytisch inerten strukturellen Verstärker und einem darauf abgeschiedenen Überzug aus katalytisch aktivem Material. Das katalytisch aktive Material kann mit einem Trägermaterial abgemischt sein, das oberflächenvergrößernd oder als sog. Interspersant wirkt.

Als strukturelle Verstärker werden für diese Anwendung meist keramische oder metallische, chemisch inerte Träger mit Wabenstruktur, z. B. aus Cordierit, Mullit, $\alpha$-Aluminiumoxid, Zirkon, Zirkonmullit, Bariumtitanat, Porzellan, Thoriumoxid, Steatit, Borcarbid, Siliziumcarbid, Siliziumnitrid oder Edelstahl verwendet.

Alle bekannten Katalysatoren haben eine Reihe von Nachteilen: Aus Vanadium und Molybdän enthaltenden Formulierungen können die Oxide des Vanadiums und Molybdäns durch Sublimation oder durch Abrasion durch den Flugstaub ausgetragen werden. Sie tragen dann zur unerwünschten Kontamination der abgeschiedenen Flugasche und des bei der Rauchgasentschwefelung produzierten Gipses mit Schwermetallen bei.

Eisenoxid enthaltende Katalysatoren mit einem hohen Eisengehalt können in schwefelhaltigen Abgasen durch Sulfatbildung irreversibel desaktiviert werden.

Die Aufarbeitung von gebrauchten schwermetallhaltigen Katalysatoren, vor allem solche, die Vanadium und/oder Wolfram enthalten, zum Zwecke der Entsorgung ist noch nicht so gelöst, daß ein ausgereiftes, technisch und ökonomisch befriedigendes Verfahren zur Verfügung stünde. Derzeit kommt daher nur eine Deponierung derselben in Frage. Außerdem müssen bereits bei der Herstellung solcher Katalysatoren strenge Arbeitsschutzmaßnahmen getroffen werden.

In Chem. Letters 1975, (7), 781-4, ist schon vorgeschlagen worden, für die Reduktion von $NO_x$-haltigen Abgasen mit Ammoniak, Kupfer- und/oder Eisen-haltige Zeolithe des Y-Typs zu verwenden.

Dieser Zeolithtyp hat sich jedoch als sehr empfindlich gegenüber sauren Bestandteilen in Abgasen erwiesen, die z. B. bei der Verbrennung fossiler Brennstoffe, wie Braunkohle, Steinkohle oder Erdöl, entstehen ($SO_2$, $SO_3$, HCl, HF oder $NO_2$). Erschwerend kommt hinzu, daß in den genannten Abgasen Wasserdampf in Konzentrationen von ca. 8 bis über 20 Vol.% vorliegt.

Es hat sich auch gezeigt, daß die genannte Zeolithstruktur durch Säureeinwirkung sowohl bei Temperaturen über dem Taupunkt als auch vor allem bei zeitweiliger Unterschreitung des Taupunkts, nach und nach durch Dealuminierung zerstört wird. Daraus resultieren für die Praxis unbrauchbar kurze Standzeiten für Katalysatoren dieses Typs.

In der DE-A-33 28 653 ist für den gleichen Anwendungszweck die Verwendung eines keramischen Molekularsiebs angegeben, dessen Durchlaßquerschnitt unterhalb der kritischen Moleküldurchmesser von Ammoniak bis oberhalb der kritischen Moleküldurchmesser von Stickstoff liegen sollen, wobei die Durchlaßquerschnittsdurchmesser vorzugsweise zwischen 2,5 und 4,0 Ångströmeinheiten liegen sollen. Eine ausreichende Definition der in Frage kommenden Molekularsiebe fehlt in dieser Schrift, den Angaben entsprechend kann es sich nicht um Mordenit handeln.

Ein Charakteristikum derselben soll jedoch darin bestehen, daß ihre Oberfläche frei von jeglicher Katalysatorbeschichtung sein soll. Quantifizierte Wirkungsangaben fehlen.

In der DE-A-36 35 284 ist für den gleichen Anwendungszweck die Verwendung eines mit Nebengruppenmetallen beladenen Zeoliths vom ZSM-5 Typ in der H-Form vorgeschlagen worden. Dieser Katalysator ist zwar säurestabil, seine Ionenaustauschkapazität ist jedoch sehr gering. Hinzu kommt, daß die Durchmesser der Zeolithporen so klein sind, daß davon ausgegangen werden kann, daß die angegebenen Nebengruppenmetalle nicht in einer an den Zeolithen gebundenen Form, sondern oxidisch in einer auf das Zeolithkorn aufgefällten Form vorliegen. Das Zeolithmaterial dient damit wahrscheinlich nur als Trägermaterial für die Nebengruppenmetalloxide.

Die europäische Patentanmeldung EP-A-0 286 507 schlägt ebenfalls Zeolithkatalysatoren für die selektive Reduktion der Stickoxide vor. Es handelt sich dabei um Zeolithe vom Mordenit-Typ mit kleinen Poren und einem Molverhältnis $SiO_2/Al_2O_3$ von etwa 12. Diese Katalysatoren zeigen eine gute Aktivität, wenn sie in der sauren Form vorliegen oder mit Ammonium ausgetauscht sind. Weitere Mordenit-Katalysatoren werden in der japanischen Offenlegungsschrift JP-A-7669476 beschrieben. Sie sind mit ein oder zwei Nebengruppen-Metallen ausgetauscht bzw. imprägniert und weisen auf Grund einer dealuiminierenden Vorbehandlung ein Molverhältnis $SiO_2/Al_2O_3$ von größer als 12 auf. Insbesondere beschreibt diese Anmeldung Katalysatoren, die mit Kupfer oder Eisen oder mit Kupfer und Eisen beladen sind.

Gegenstand der Erfindung ist ein Verfahren zur Reduktion von in Sauerstoff enthaltenden Abgasen vorliegenden Oxiden des Stickstoffs durch Mischen der Abgase mit Ammoniakgas und Leiten dieses Gemisches mit einer Raumgeschwindigkeit von 1000 bis 60.000 $h^{-1}$ entsprechend einer Katalysatorflächen-belastung von 0,5 bis 100 $m^3$ i.N./ $hm^2$ bei Temperaturen von 200 bis 600° C über einen säurebeständigen Zeolithen vorn Mordenit-Typ, dessen Beladung aus Eisen, Kupfer und Cer besteht oder bei Temperaturen von 200 bis 450° C über einen säurebeständigen Zeolithen vom Mordenit-Typ, dessen Beladung aus Eisen, Kupfer und Molybdän besteht.

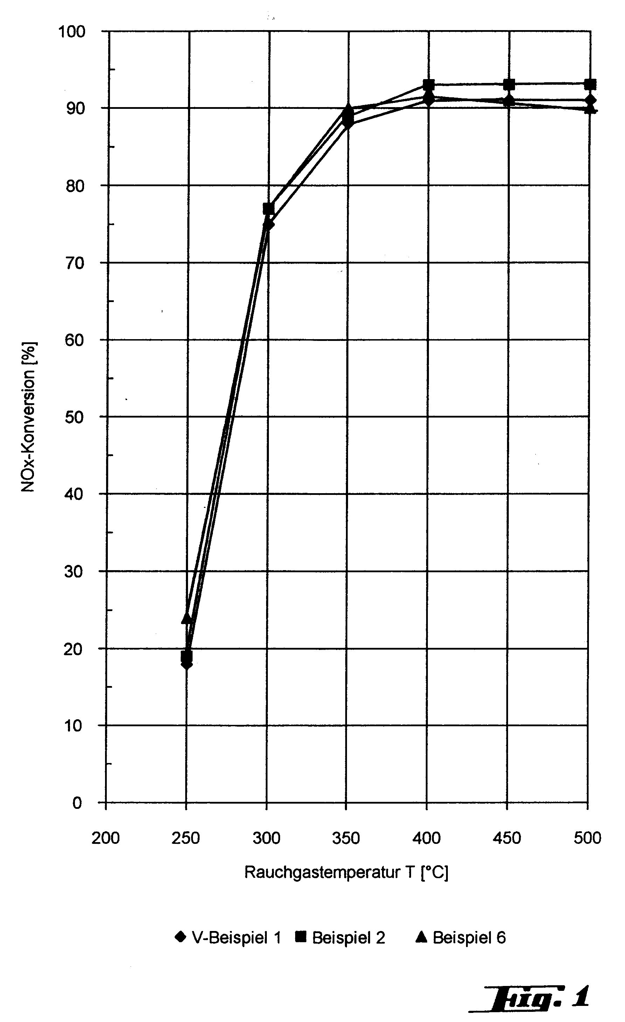

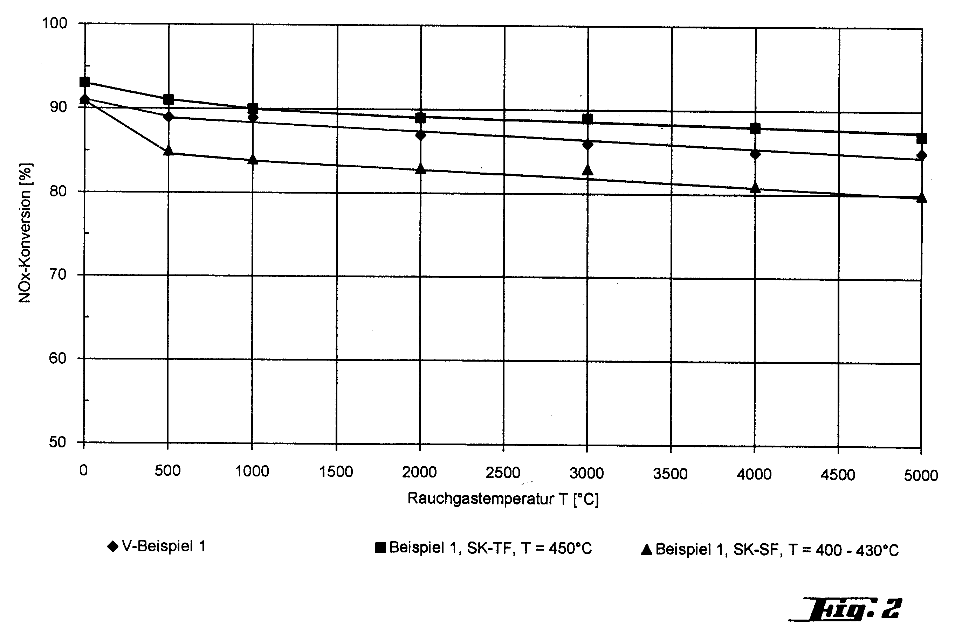

Eine erhebliche Verbesserung der Reduktionswirkung der aus JP-A-51069476 bekannten Katalysatoren mit Kupfer und Eisen sowie eine deutliche Verringerung des Aktivitätsabfalls beim Langzelteinsatz in Rauchgasen von Steinkohlen-Trockenfeuerungen (SK-TF) mit Betriebstemperaturen über 350° C (s. Figuren 1 und 2) wird erhalten, wenn der Katalysator als drittes Metall Cer enthält, und zwar ebenfalls in Bindung zum Mordeniten und/oder als Oxid auf dessen Oberfläche befindlich.

Eine überraschend festgestellte Aktivitässteigerung besonders für den Einsatz von Entstickungs-Katalysatoren im Temperaturbereich zwischen 250 und 350° C wird erhalten, wenn der Mordenith neben Kupfer und Eisen noch Molybdän enthält, und zwar ebenfalls in Bindung zum Zeolithen und/oder als Oxid auf dessen Oberfläche befindlich (s. Fig. 1). Diese Variante ist insbesondere interessant für die Nachrüstung von gasgefeuerten Industriebetrieben und für den Einsatz nach einer Entschwefelungsanlage von Kraftwerken.

Als säurebeständiger Zeolith eignet sich besonders ein Mordenit-Typ, der vorzugsweise ein $SiO_2$ : $Al_2O_3$-Molverhältnis (Modul) von über 8 aufweist.

Für den praktischen Einsatz in Rauchgasen von Kohlenfeuerungen, die einen hohen Anteil saurer Bestandteile aufweisen, haben sich Module von 10 - 30, insbesondere 15 und 25 besonders bewährt, da gefunden wurde, daß Mordenite dieses Typs praktisch keiner nachweisbaren Dealuminierung im Einsatz unterliegen und dennoch über ein genügend hohes Metallaufnahmevermögen verfügen. Im Rahmen der Erfindung kann ein Zeolith eingesetzt werden, der innerhalb seiner Ionenaustauschkapazität mit den Nebengruppenmetallen Kupfer und Eisen sowie Cer oder Molybdän beladen ist.

Die Einbringung der Metalle bzw. Metallverbindungen in den Zeolithen kann nach verschiedenen Präparationsmethoden erfolgen. Dazu zählen der Ionenaustausch bzw. die Imprägnierung oder Ausfällung sowie die Vermischung der Oxide oder Metallsalze mit dem Zeolithen mit anschließender Kalzinierung in oxidierender oder reduzierender Atmosphäre bzw. in formierender ammoniakhaltiger Atmosphäre. Mit den zuletzt genannten Präparationsmethoden können z. B. Oxide der vorgesehenen Metalle auf der Zeolithoberfläche dadurch abgeschieden werden, daß eine thermische Zersetzung einer Metallsalzimprägnierung oder eines Präzipitats bzw. Copräzipitats an der Luft vorgenommen wird. Als geeignete Metallsalze erweisen sich u. a. Eisensulfat, Eisennitrat, Kupfersulfat, Kupfernitrat, Kupferacetat, Cernitrat, Ceracetat, Ammoniummolybdat.

Nach vorteilhaften Ausführungsformen der Erfindung weist der verwendete Zeolith einen Gesamtgehalt an Nebengruppenmetallen von 0,1 bis 13,5 Gew.%, bevorzugt 0,2 bis 7,5 Gew.%, insbesondere 0,3 bis 5 Gew.-%, bezogen auf das Zeolithgewicht, auf.

Die besten Ergebnisse für den Einsatz bei Kohlenfeuerungen mit Rauchgastemperaturen oberhalb 350°C werden erhalten, wenn, bezogen auf das Zeolithgewicht, 0,2 - 5,2 Gew.% Kupfer und 0,1 - 4,5 Gew.% Eisen in Kombination mit 0,1 - 1,0 Gew.% Cer vorliegen.

Für den Einsatz bei Rauchgastemperaturen zwischen 250 und 350° C werden die besten Ergebnisse erhalten, wenn, bezogen auf das Zeolithgewicht, 0,2 -5,2 Gew.% Kupfer und 0,1 - 4,5 Gew.% Eisen in Kombination mit 0,2 - 2,5, Gew.% Molybdän vorliegen.

Beim erfindungsgemäßen Verfahren reichen in den weitaus meisten Anwendungsfällen schon Konzentrationen an dem katalytisch aktiven Metall bzw. den katalytisch aktiven Metallen aus, die man allein durch Ionenaustausch in den Zeolithen einbringen kann. Dann wird diese Präparationsmethode bevorzugt. Jedoch können auch nach den anderen genannten Einbringungsmethoden modifizierte Zeolithe sehr gut zu brauchbaren Ergebnissen in dem erfindungsgemäßen Verfahren führen.

Der Ionenaustausch, d. h. die Überführung der $H^+$-Form oder der $Na^+$-Form des Zeolithen in die Übergangsmetallhaltige Form, kann nach bekannten Präparationstechniken erfolgen - D.W. Breck, Zeolithe Molekularsieives, John Wiley and Sons, New York 1974. Die im Rahmen der vorliegenden Erfindung erarbeiteten optimalen Präparationsparameter sind in den Beispielen näher beschrieben.

Der Zeolithkatalysator kann im erfindungsgemäßen Verfahren entweder als Oberflächenbeschichtung auf einem gegenüber den Abgasen resistenten geformten keramischen oder metallischen Träger oder als Vollkatalysator, vorzugsweise in Monolith- oder Wabenform, eingesetzt werden. Vollkatalysatoren können durch Einarbeiten eines geeigneten Bindemittels, wie $TiO_2$(Anatas), $TiO_2$-$WO_3$-Mischoxid oder Bentonit und Verpressen bzw. Extrudieren in an sich bekannter Weise erhalten werden.

Die Reduktion der Stickoxide erfolgt nach den besonders günstigen Varianten des Verfahrens im Temperaturbereich von 250 - 550, vorzugsweise 280 - 500, insbesondere 300 - 480° C.

Ferner hat sich als vorteilhaft erwiesen, die Reduktion bei Raumgeschwindigkeit von 2.000 - 40.000, vorzugsweise 3.000 - 20.000, insbesondere 5.000 - 10.000 $h^{-1}$, entsprechend einer Katalysatoroberflächenbelastung von 1 - 70, vorzugsweise 3 - 45, insbesondere 5 - 15 $m^3$i.N./h $m^2$ durchzuführen.

Schließlich hat es sich als günstig erwiesen, ein Molverhältnis zwischen Stickoxid und dem Reduktionsmittel Ammoniak von 0,6 - 1,6, vorzugsweise 0,7 - 1,1, insbesondere 0,8 - 1,0, anzuwenden.

Im vorliegenden Verfahren sollte im Abgas mindestens ein Sauerstoffanteil von 0,1 Vol.%, besser von mehr als 0,5 Vol.% oder sogar 1,0 Vol.% vorliegen, um die volle Effektivität des Katalysators erzielen zu können.

Die Erfindung wird nachfolgend anhand von Ausführungsbeispielen weiter erläutert. Die Aktivität der Katalysatoren wurde zunächst in staubfreien Modellgasen in einer Labortestanlage und danach im Abgas einer Ölfeuerungsanlage getestet. Langzeittests wurden im Rauchgas einer Steinkohlen-Trockenfeuerung (SK-TF) und einer Steinkohlen-Schmelzkammerfeuerung (SK-SF) durchgeführt (s. Fig. 2).

Bei den Tests in der Labortestanlage und an der Ölfeuerung wurden Katalysatoren, bestehend aus den Nebengruppenmetall enthaltenden Zeolithen, aufgebracht auf einen Monolithträger aus Mullit mit einer Zellteilung (1 Steg + 1 Öffnung) von 2 mm, eingesetzt.

Die Langzeittests in staubhaltigen Rauchgasen von Kohlenfeuerungen wurden wegen der abrasiven Eigenschaften der Flugasche mit Vollkatalysatoren, bestehend aus den erfindungsgemäßen Zeolithen, durchgeführt. Die Testanlagen hierzu wurden entweder im Bypass zum Rauchgasstrom geschaltet oder in denselben integriert.

Die der Erfindung zugrunde liegenden Katalysatoren zeigten bei den Langzeitversuchen an Kohlenfeuerungen insbesondere bei Rauchgastemperaturen oberhalb von 350°C sowie besonders deutlich beim Einsatz hinter Steinkohle-Schmelzkammerfeuerungen signifikante Überlegenheit zum Stand der Technik.

Vergleichsbeispiel 1

Durch Lösen von Kupfer- und Eisensalz in 50 l entsalztem Wasser wird eine 0,0,1 Mol/l Kupfersalz und 0,1 Mol/l Eisensalz enthaltende Lösung hergestellt. Mittels Zusetzen von Schwefelsäure oder Ammoniak wird der pH-Wert der Lösung auf 2,4 eingestellt.
Konzentration und pH-Wert-Einstellung richten sich nach der angestrebten Kupfer- und Eisenkonzentration im Endprodukt Kupfer-Eisen-Mordenit.
Dier so hergestellte Lösung wird auf 80° C erwärmt. Anschließend werden 25 kg H-Mordenit mit dem Modul ($SiO_2$/$Al_2O_3$-Molverhältnis von 19 eingetragen.
Die Mordenitsuspension wird unter weiterem Rühren bei 30 Minuten lang bei 80° C gehalten und anschließend abfiltriert. Der dabei erhaltene Filterkuchen wird zweimal mit entsalztem Wasser nachgewaschen. Die Trocknung des Kupfer-Eisen-Mordenits kann entweder bei 120° C im Hordenofen oder durch Sprühtrocknung erfolgen. Die chemische Zusammensetzung und die physikalischen Kenndaten des H-Mordenits sind in Tabelle 1 angegeben.

Tabelle 1

| Chemische Zusammensetzung und physikalische Kenndaten von H-Mordenit mit dem Modul 19 | |
|---|---|
| $SiO_2$ | 74,98 Gew.% |
| $Al_2O_3$ | 6,70 Gew.% |
| $Na_2O$ | 0,21 Gew.% |
| BET-Oberfläche | 500 $m^2$/g |
| Phasenanalyse | Mordenit |

Der so hergestellte Vergleichskatalysator weist einen Cu-Gehalt von 1,0 Gew.-% und einen Eisengehalt von 0,6 Gew.% auf.
Die Überführung des Katalysatorpulvers in technisch einsetzbare Formen wird in den weiter unten dargelegten Präparationsmethoden A und B beschrieben.

Beispiele 1 - 4

Entsprechend dem in Vergleichsbeispiel 1 beschriebenen Verfahren werden die in Tabelle 2 aufgeführten Kupfer und Eisen enthaltenden Katalysatoren präpariert. Die zusätzliche Einbringung des Cers erfolgt in Beispiel 1 durch einen zweiten nachgeschalteten Ionenaustausch des Kupfer und Eisen enthaltenden Mordenit, der mit einer 0,1 molaren Cersalzlösung bei 80° C durchgeführt wird. Einen vergleichbaren katalytischen Effekt hat eine entsprechend Beispiel 2 durchgeführte Nachimprägnierung des bereits als Extrudat vorliegenden Kupfer und Eisen enthaltenden Mordenits mit Cernitrat-Lösungen. Im Falle von Beispiel 4 erfolgte das Zusetzen einer entsprechenden Menge festen feinpulvrigen Ceroxids zu der Kupfer und Eisen enthaltenden Mordenitmasse vor dem in der Präparationsmethode A und B beschriebenen Verformungsvorgang.

6

Tabelle 2

| Beisp. | Metallgehalt im Mordenit [Gew.%] | | | Methode d.Cerdotierung | | |
|---|---|---|---|---|---|---|
| Nr. | Cu | Fe | Ce | Austausch | Nachimimprägnierung | Feststoffzusatz |
| 1 | 1,0 | 0,58 | 0,1 | x | - | - |
| 2 | 1,0 | 0,58 | 0,5 | - | x | - |
| 3 | 1,0 | 0,58 | 1,0 | - | - | - |
| 4 | 1,0 | 0,58 | 1,0 | - | - | x |

Die Überführung der Katalysatorpulver in technisch einsetzbare Formen wird in den weiter unten dargelegten Präparationsmethoden A und B beschrieben.

Beispiele 5 - 8

25 kg Eisen und Kupfer enthaltender Mordenit, der entsprechend dem in Vergleichsbeispiel 1 beschriebenen Verfahren präpariert wurde, wird im Fall der Beispiele 5 und 6 unter Rühren bei 80° C in 50 l einer 0,1 molaren Ammoniummolybdat-Lösung bei pH 9 - 10 eingetragen. Die Austauschzeit beträgt 30 Minuten. Die Aufarbeitung des CuFeMo-Mordenits erfolgt entsprechend dem in Vergleichs-Beispiel 1 beschriebenen Verfahren. Bei Beispiel 7 wird das Molybdän durch Nachimprägnieren des bereits als Extrudat vorliegenden Mordenits mit Ammoniummolybdatlösung und bei Beispiel 8 durch Zusatz einer entsprechenden Menge feinpulverisierten Molybdänoxids zu der Kupfer und Eisen enthaltenden Mordenitmasse vor dem in der Präparationsmethode A und B beschriebenen Verformungsvorgang eingebracht. In Tabelle 3 sind Kupfer-, Eisen- und Molybdängehalte im Endprodukt sowie die jeweilige Präparationsmethode angegeben.

Tabelle 3

| Beisp. | Metallgehalt im FeMo-bzw. CuFeMo-Mordenit [Gew.%] | | | Methode d. Molybdändotierung | | |
|---|---|---|---|---|---|---|
| Nr. | Cu | Fe | Mo | Austausch | Nachimprägn. | Festst.-Zusatz |
| 5 | 2,2 | 0,3 | 0,3 | x | - | - |
| 6 | 1,0 | 0,6 | 0,3 | x | - | - |
| 7 | 1,0 | 0,6 | 0,8 | - | x | - |
| 8 | 1,0 | 0,6 | 1,3 | - | - | x |

Die Überführung der Katalysatorpulver in technisch einsetzbare Formen wird in den weiter unten dargelegten Präparationsmethoden A und B beschrieben.

Vergleichsbeispiele 2 - 5 und Beispiele 9 - 16

Entsprechend den im Vergleichsbeispiel 1 und in den Beispielen 1 bis 8 beschriebenen Verfahren werden CuFe-, CuFeCe- und CuFeMo-Mordenit-Katalysatoren präpariert. Als Ausgangsmaterial wurde H-Mordenit mit unterschiedlichen Modulen ($SiO_2/Al_2O_3$-Molverhältnis) verwendet. In Tabelle 4 sind die chemischen Zusammensetzungen der eingesetzten H-Mordenite angegeben.

Tabelle 4

| Anteil [Gew.%] \ Modul | $SiO_2$ | $Al_2O_3$ | $Na_2O$ |
|---|---|---|---|
| 10 | 86,8 | 14,0 | 0,08 |
| 15 | 89,5 | 10,1 | 0,07 |
| 19 | 91,8 | 8,2 | 0,05 |
| 25 | 93,8 | 6,4 | 0,04 |

In Tabelle 5 sind die präparierten CuFe-Mordenit-Vergleichs-Katalysatoren mit verschiedenen Modul-Werten aufgeführt.

Tabelle 5

| Beispiel | Modul | Metallgehalt im Endprodukt [Gew.%] | |
|---|---|---|---|
| Nr. | | Cu | Fe |
| V 2 | 10 | 0,6 | 0,4 |
| V 3 | 15 | 0,7 | 0,5 |
| V 4 | 19 | 0,8 | 0,6 |
| V 5 | 25 | 0,8 | 0,5 |

In Tabelle 6 sind die präparierten CuFe/Ce-Mordenit-Katalysatoren mit verschiedenen Modul-werten aufgeführt.

Tabelle 6

| Beispiel | Modul | Metallgehalt im Endprodukt [Gew.%] | | |
|---|---|---|---|---|
| Nr. | | Cu | Fe | Ce |
| 9 | 10 | 0,6 | 0,4 | 0,5 |
| 10 | 15 | 0,7 | 0,5 | 0,5 |
| 11 | 19 | 0,8 | 0,6 | 0,5 |
| 12 | 25 | 0,8 | 0,5 | 0,5 |

In Tabelle 7 sind die präparierten CuFeMo-Mordenit-Katalysatoren mit verschiedenen Modul-werten aufgeführt.

Tabelle 7

| Beispiel | Modul | Metallgehalt im Endprodukt [Gew.%] | | |
|---|---|---|---|---|
| Nr. | | Cu | Fe | Mo |
| 13 | 10 | 0,6 | 0,4 | 0,3 |
| 14 | 15 | 0,7 | 0,5 | 0,3 |
| 15 | 19 | 0,8 | 0,6 | 0,3 |
| 16 | 25 | 0,8 | 0,5 | 0,3 |

Die Überführung der Katalysatorpulver in technisch einsetzbare Formen wird in den weiter unten dargelegten Präparationsmethoden A und B beschrieben.

Präparationsmethode A

Herstellung von Trägerkatalysatoren

10 kg eines in den Beispielen bzw. Vergleichsbeispielen beschriebenen Katalysators werden in 25 l entsalztem Wasser eingerührt. Der so erhaltenen Suspension werden unter fortgesetztem Rühren 5 Gew.% Bentonit, bezogen auf den eingesetzten Katalysator, als Bindemittel zugesetzt. Um eine optimale Bindung des Bindemittels zu gewährleisten, muß in der Suspension ein pH-Wert zwischen 8,5 und 10,0 eingestellt werden. Die Beschichtung eines keramischen Wabenkörpers aus Mullit, mit parallel verlaufenden Kanälen von quadratischem Querschnitt mit einer Zellteilung (1 Steg + 1 Öffnung) von 2,0 mm erfolgt durch Eintauchen des keramischen Trägers in die wäßrige Suspension.

Im Anschluß an den Tauchschritt werden die Kanäle des monolithischen Trägers mit Preßluft freigeblasen und danach wird bei 150° C im Luftstrom getrocknet. Der Beschichtungsvorgang muß so oft wiederholt werden, bis ca. 160 g Katalysatormasse pro Kubikdezimeter Trägervolumen aufgebracht sind. Die beschichteten und getrockneten Wabenkörper werden bei 550° C zwei Stunden getempert.

Alternativ zu dem beschriebenen Verfahren kann die Beschichtungssuspension wie folgt hergestellt werden: Nach dem in den Beispielen und Vergleichsbeispielen vorgesehenen Auswaschen des katalytisch aktivierten Mordenits, wird dieser zusammen mit den 5 Gew.% Bentonit als Bindemittel erneut in entsalztem Wasser suspendiert. Damit ein feinteiliges bindemittelhaltiges Katalysatorkorn entsteht, wird 14 Stunden gerührt und danach eine Sprühtrocknung durchgeführt. Das Katalysatorkorn wird dann wie oben beschrieben verarbeitet. Mit dem Bindemittel können gleichzeitig die in den Ansprüchen genannten Metalle in Form ihrer Salze oder Oxide hinzugefügt werden.

Eine Nachimprägnierung von Tragerkatalysatoren entsprechend den Beispielen 2 oder 11 mit den in den Ansprüchen genannten Metallen erfolgt durch Aufnahme einer der Wasserkapazität des beschichteten Trägers entsprechenden Menge Metallsalzlösung. Nach dem Imprägniervorgang erfolgt die Trocknung des Katalysators bei 150° C. Anschließend wird bei 550° C zwei Stunden getempert.

Präparationsmethode B

Herstellung von Vollkatalysatoren

Entsprechend dem in den Beispielen und Vergleichsbeispielen beschriebenen Verfahren wird ein metallhaltiger Mordenit-Katalysator hergestellt. 10 kg dieses Katalysatorpulvers werden mit 5 kg Titanoxid vom Anatastyp, 700 kg alkallfreiem Ton und 300 g Glasfasern (1 - 2 cm Länge) vermischt und unter Zusatz von 2kg 15 %iger wäßriger Ammoniak-Lösung von 10 l Wasser geknetet. Als Verformungshilfsmittel werden 100 g Milchsäure, 150 g Holzschliff, 70 g Polyethylenoxid und 120 g Carboxy-Methyl-Zellulose zugesetzt. Im Fall der Beispiele 4 und 12 werden außerdem noch die Oxide der in den Ansprüchen genannten Metalle in fester Form hinzugegeben.

Die Mischung wird 5 - 8 Stunden lang zu einer homogenen Paste verknetet. Zur Einstellung der für die Verformung geeigneten Plastizität wird der Wassergehalt korrigiert. Mit einem Extruder wird die Katalysatormasse dann zu Wabenkörpern mit parallel verlaufenden Kanälen von quadratischem Querschnitt mit einer Zellteilung von 3,7 mm (1 Steg + 1 Öffnung) verpreßt. Nach Trocknung bei ansteigender Temperatur von 20 - 60° C in einer Klimakammer werden die Formkörper 24 Stunden bei ansteigender Temperatur von

9

300 - 600° C kalziniert.

Eine Nachimprägnierung von Vollkatalysatoren mit Aktivmetallen kann wie unter Präparationsmethode A beschrieben erfolgen.

Ergebnisse

Die entsprechend den Beispielen und Vergleichsbeispielen präparierten Katalysatoren wurden im Abgas einer Ölfeuerung getestet. Das Abgas wurde durch Zudosieren der Schadstoffgase NO und $SO_2$ und der zur Stickoxidreduktion erforderlichen Menge Ammoniak gemäß den unten angegebenen Testbedingungen eingestellt.

Testbedingungen

| Abgaszusammensetzung: | $NO_x$ | 800 ppm (Vol) |
|---|---|---|
| | $NH_3$ | 800 ppm (Vol) |
| | $SO_2$ | 500 ppm (Vol) |
| | $O_2$ | 5,0 Vol.% |
| | $H_2O$ | 11,0 Vol.% |
| | $CO_2$ | 12,0 Vol.% |
| | $N_2$ | Rest |

Die Katalysatortests wurden im Temperaturbereich 200 - 600° C und bei einer Raumgeschwindigkeit von 20.000 $h^{-1}$ durchgeführt. Ausgewählte Ergebnisse der Messungen sind in der Graphik von Fig. 1 gezeigt, wobei die zugrundeliegenden Werte in Tabelle 8 zusammengefaßt sind.

Tabelle 8

| Beispiel Nr. Rauchgastemperat. [ °C ] | V 1 | 2 | 6 |
|---|---|---|---|
| 250 | 18 | 19 | 24 |
| 300 | 75 | 77 | 77 |
| 350 | 88 | 89 | 90 |
| 400 | 91 | 93 | 92 |
| 450 | 91 | 93 | 91 |
| 500 | 91 | 93 | 90 |

Die angegebenen Werte sind $NO_x$-Umsätze ($\eta_{NO_x}$) in Prozent bezogen auf die $NO_x$-Ausgangskonzentration

$$\eta NO_x = \frac{[NO_x]_{vor\ Kat.} - [NO_x]_{nach\ Kat.}}{[NO_x]_{vor\ Kat.}}$$

Langzeittests wurden mit Vollkatalysatoren entsprechend Vergleichsbeispiel 1 und Beispiel 1 sowohl im Rauchgas einer Steinkohlen-Trockenfeuerung (SK-TF) bei einer mittleren Betriebstemperatur von 450°C als auch im Rauchgas einer Steinkohlen-Schmelzkammerfeuerung (SK-SF) bei Betriebstemperaturen zwischen 400 und 430° C durchgeführt.

Die Ergebnisse der Konversionsmessungen über eine Betriebsdauer von 5000 Stunden sind in Tabelle 9 aufgelistet und in Figur 2 grafisch dargestellt.

Tabelle 9*

| Betr.Zeit [h] | SK-TF T = 450°C | | SK-SF T = 400-430°C |
|---|---|---|---|
| | Beispiel 1 | Vergleichsbeispiel V 1 | Beispiel 1 |
| Nullmessg. | 93 | 91 | 91 |
| 500 | 91 | 89 | 85 |
| 1000 | 90 | 89 | 84 |
| 2000 | 89 | 87 | 83 |
| 3000 | 89 | 86 | 83 |
| 4000 | 88 | 85 | 81 |
| 5000 | 87 | 85 | 80 |

* Die angegebenen Werte sind $NO_x$-Umsätze ($\eta_{NO_x}$) in Prozent bezogen auf die $NO_x$-Ausgangskonzentration.

## Patentansprüche

1. Verfahren zur Reduktion von in Sauerstoff enthaltenden Abgasen vorliegenden Oxiden des Stickstoffs durch Mischen der Abgase mit Ammoniakgas und Leiten dieses Gemisches mit einer Raumgeschwindigkeit von 1000 bis 60.000 $h^{-1}$ entsprechend einer Katalysatorflächenbelastung von 0,5 bis 100 $m^3$ i.N./$hm^2$ bei Temperaturen von 200 bis 600° C über einen säurebeständigen Zeolithen vom Mordenit-Typ, dessen Beladung aus Eisen, Kupfer und Cer besteht oder bei Temperaturen von 200 bis 450° C über einen säurebeständigen Zeolithen vom Mordenit-Typ, dessen Beladung aus Eisen, Kupfer und Molybdän besteht.

2. Verfahren nach Anspruch 1,
   **dadurch gekennzeichnet,**
   daß der Zeolith vom Mordenit-Typ ein $SiO_2 : Al_2O_3$-Molverhältnis (Modul) von 10 - 30, insbesondere 15 - 25 aufweist.

3. Verfahren nach den Ansprüchen 1 oder 2,
   **dadurch gekennzeichnet,**
   daß ein Zeolith eingesetzt wird, der innerhalb seiner Ionenaustauschkapazität mit den Nebengruppenmetallen gemäß Anspruch 1 beladen ist.

4. Verfahren nach den Ansprüchen 1 bis 3,
   **dadurch gekennzeichnet,**
   daß der verwendete Zeolith einen Gesamtgehalt an Nebengruppenmetallen von 0,1 - 13,5, bevorzugt 0,2 - 7,5 Gew.-%, bezogen auf das Zeolithgewicht, aufweist.

5. Verfahren nach Anspruch 4,
**dadurch gekennzeichnet,**
daß ein mit Kupfer, Eisen und Cer beladener Zeolith 0,2 - 5,2 Gew.-% Kupfer, 0,1 - 4,5, Gew.-% Eisen und 0,1 - 1,0 Gew.-% Cer, bezogen auf das Gewicht des Zeolithen, enthält.

6. Verfahren nach Anspruch 4,
**dadurch gekennzeichnet,**
daß ein mit Kupfer, Eisen und Molybdän beladener Zeolith 0,2 - 5,2 Gew.-% Kupfer, 0,1 - 4,5 Gew.-% Eisen und 0,2 - 2,5 Gew.-% Molybdän, bezogen auf das Gewicht des Zeolithen, enthält.

7. Verfahren nach den Ansprüchen 1 bis 6,
**dadurch gekennzeichnet,**
daß der Katalysator als Oberflächenbeschichtung auf einem chemisch inerten geformten keramischen oder metallischen Träger, vorzugsweise in Monolith- oder Wabenform, eingesetzt wird (Trägerkatalysator).

8. Verfahren nach den Ansprüchen 1 bis 6,
**dadurch gekennzeichnet,**
daß der Katalysator mit einem Bindemittel verformt, als Formkörper in Schüttgut- oder vorzugsweise in Monolith- bzw. Wabenform, eingesetzt wird (Vollkatalysator).

**Claims**

1. A method of reducing oxides of nitrogen present in oxygen containing waste gases by mixing the waste gases with ammonia gas and conveying the mixture at a space velocity of 1000 to 60,000 $h^{-1}$corresponding to a load per unit area of catalyst of 0.5 to 100 $m^3$.i.N./$hm^2$ at temperatures of 200 to 600°C over a mordenite-type acid-resistant zeolite loaded with iron, copper and cerium or at temperatures of 200 to 450°C over a mordenite-type acid-resistant zeolite loaded with iron, copper and molybdenum.

2. A method according to claim 1, characterised in that the mordenite-type zeolite has an $SiO_2$ : $Al_2O_3$ molar ratio (modulus) of 10 - 30, more particularly 15 - 25.

3. A method according to claim 1 or 2, characterised by use of a zeolite which is loaded within its ion exchange capacity with the transition metals according to claim 1.

4. A method according to claims 1 to 3, characterised in that the zeolite used has a total content of transition metals of 0.1 - 13.5, preferably 0.2 - 7.5 wt.%, relative to the weight of zeolite.

5. A method according to claim 4, characterised in that a zeolite loaded with copper, iron and cerium contains 0.2 - 5.2 wt.% copper, 0.1 - 4.5 wt.% iron and 0.1 - 1.0 wt.% cerium relative to the weight of the zeolite.

6. A method according to claim 4, characterised in that a zeolite loaded with copper, iron and molybdenum contains 0.2 - 5.2 wt.% copper, 0.1 - 4.5 wt.% iron and 0.2 - 2.5 wt.% molybdenum, relative to the weight of the zeolite.

7. A method according to claims 1 to 6, characterised in that the catalyst is used in the form of a surface coating on a chemically inert, shaped ceramic or metal carrier, preferably in monolithic or honeycomb form (carrier catalyst).

8. A method according to claims 1 to 6, characterised in that the catalyst is shaped using a binder, and is used as a shaped member in bulk or preferably in monolithic or honeycomb form (solid catalyst).

**Revendications**

1. Procédé pour la réduction d'oxydes de l'azote présents dans des gaz rejetés contenant de l'oxygène, par mélange des gaz rejetés avec de l'ammoniac gazeux et envoi de ce mélange, à une vitesse spatiale de 1000 à 60 000 h$^{-1}$, correspondant à une charge de la surface du catalyseur de 0,5 à 100 m$^3$ i.N./h. m$^2$, et à des températures de 200 à 600°C, sur une zéolite résistant aux acides, de type mordénite, dont la charge consiste en fer, cuivre et cérium, ou à des températures de 200 à 450°C, sur une zéolite résistant aux acides, de type mordénite, dont la charge consiste en fer, cuivre et molybdène.

2. Procédé selon la revendication 1, caractérisé en ce que la zéolite du type mordénite présente un rapport molaire SiO$_2$:Al$_2$O$_3$ (module) de 10-30, en particulier de 15-25.

3. Procédé selon la revendication 1 ou 2, caractérisé en ce que l'on utilise une zéolite qui est chargée selon la revendication 1, dans les limites de sa capacité d'échange d'ions, avec les métaux des sous-groupes du tableau périodique.

4. Procédé selon les revendications 1 à 3, caractérisé en ce que la zéolite utilisée présente une teneur totale en métaux des sous-groupes allant de 0,1 à 13,5, de préférence de 0,2 à 7,5 % en poids, par rapport au poids de la zéolite.

5. Procédé selon la revendication 4, caractérisé en ce qu'une zéolite chargée de cuivre, fer et cérium contient 0,2-5,2 % en poids de cuivre, 0,1-4,5 % en poids de fer et 0,1-1,0 % en poids de cérium, par rapport au poids de la zéolite.

6. Procédé selon la revendication 4, caractérisé en ce qu'une zéolite chargée de cuivre, fer et molybdène contient 0,2-5,2 % en poids de cuivre, 0,1-4,5 % en poids de fer, et 0,2 - 2,5 % en poids de molybdène, par rapport au poids de la zéolite.

7. Procédé selon les revendications 1 à 6, caractérisé en ce que le catalyseur est utilisé sous forme d'un revêtement superficiel sur un support métallique ou céramique chimiquement inerte, mis en forme, de préférence en forme monolithique ou de corps en nid d'abeille (catalyseur fixé sur support).

8. Procédé selon les revendications 1 à 6, caractérisé en ce que le catalyseur est mis en forme avec un liant, et utilisé en tant que corps moulé, sous forme de matériau en lit ou de préférence sous forme de corps monolithique ou en nid d'abeille (catalyseur massif).

NOx-Konversion [%] (y-axis)

Rauchgastemperatur T [°C] (x-axis)

◆ V-Beispiel 1    ■ Beispiel 2    ▲ Beispiel 6

Fig. 1

Fig. 2

◆ V-Beispiel 1    ■ Beispiel 1, SK-TF, T = 450°C    ▲ Beispiel 1, SK-SF, T = 400 - 430°C